# EUROPEAN PATENT APPLICATION

(11) **EP 3 845 804 A1**
(43) Date of publication of application: **07.07.2021**
(21) Application number: 20193130.0
(22) Date of filing: 27.08.2020
(51) Int. Cl.: F23D 14/64

(54) **GAS LINE FOR GAS APPLIANCE**

(30) Priority: 30.12.2019 US 201962954950 P
(71) Applicant: Pinnacle Climate Technologies, Eden Prairie, MN 55344 (US)
(72) Inventor: ERISGEN, Sukru, Eden Prairie 55347, mn Minnesota 55347 (US)
(74) Representative: Ström & Gulliksson AB

(57) **Abstract**

A gas powered appliance with a gas line (20) having a first and second end. The gas line is manufactured to integrally include a specific orifice outlet diameter (D3). This can reduce the need for additional parts or a separate fitting. Additionally, there is a mixing chamber (32) where the gas from the gas line (20) mixes with air before combusting.

## Description

### TECHNICAL FIELD

The present disclosure relates to a gas powered appliance and a gas line included in such a gas appliance.

### BACKGROUND

On gas powered appliances, such as heating and cooling, it is important to have a precise orifice for controlling gas at various pressures for optimal combustion. Such orifices are precisely drilled or machined to control valves or gas discharged fittings. Size of an orifice determines the amount of gas flow prior to combustion, manufacturers use orifice size charts to determine the appropriate size depending upon pressure, heat output required and the type of gas that is being used. Once a proper size is selected machined fittings are treaded, soldered, flare fitted, or attached in a different way. Machining a separate fitting can create additional costs, parts, and has the potential to create leaks.

### SUMMARY

A gas powered appliance can include a gas line comprising a main portion defined as a portion of a tube and having a first nominal inside diameter and an orifice portion defined as a portion of a tube and being adjacent the main portion, the orifice portion having a second nominal inside diameter less than the first nominal inside diameter. The gas powered appliance can also include a mixing chamber defining an opening, wherein the gas line orifice portion extends through the opening into the internal volume of the mixing chamber.

In some examples, the orifice portion and the main portion are integrally formed from a common tube section.

In some examples, the mixing chamber includes a plurality of flanges extending radially inward into the opening, the plurality of flanges engaging with the gas line to retain the gas line to the mixing chamber.

In some examples, the mixing chamber includes a second opening for receiving combustion air.

In some examples, the orifice portion is a spun metal component.

In some examples, the orifice portion is a crimped metal component.

In some examples, the second nominal inside diameter is less than half of the first nominal inside diameter.

In some examples, the main portion and orifice portion are formed from a copper material.

A variety of additional aspects will be set forth in the description that follows. The aspects can relate to individual features and to combinations of features. It is to be understood that both the forgoing general description and the following detailed description are exemplary and explanatory only and are not restrictive of the broad inventive concepts upon which the examples disclosed herein are based.

### BRIEF DESCRIPTION OF THE DRAWINGS

The accompanying drawings, which are incorporated in and constitute a part of the description, illustrate several aspects of the present disclosure. A brief description of the drawings is as follows:
Figure 1 is sectional a view of a prior art gas powered device
Figures 2A and 2B are isometric views of fittings for prior art gas powered devices.
Figure 3 is a sectional view of a gas powered device utilizing a gas line having an orifice portion.
Figure 4 is an enlarged view of a portion of the gas powered device shown in Figure 3.
Figure 5 is a photographic view of a plurality of gas lines having orifice portions usable with the gas powered device shown in Figure 3.
Figure 6 is a perspective view of a second example of a gas line having an orifice portion usable with the gas powered device shown in Figure 3.
Figure 7 is a perspective view of a third example of a gas line having an orifice portion usable with the gas powered device shown in Figure 3.
Figure 8 is a top view of a gas powered device utilizing a gas line having an orifice portion of the type illustrated at Figures 3 to 5.
Figure 9 is a sectional view of the gas powered device of Figure 8.
Figure 10 is an enlarged first cross-sectional view of a portion of the gas powered device of Figure 8, as indicated at Figure 9.
Figure 11 is an enlarged second cross-sectional view of a portion of the gas powered device of Figure 8, as indicated at Figure 9.
Figure 12 is an end view of the portion of the gas powered device shown at Figures 10 and 11, with the gas tube installed.
Figure 13 is an end view of the portion of the gas powered device shown at Figures 10 and 11, with the gas tube removed.

### DETAILED DESCRIPTION

Various examples will be described in detail with reference to the drawings, wherein like reference numerals represent like parts and assemblies throughout the several views. Reference to various examples does not limit the scope of the claims attached hereto. Additionally, any examples set forth in this specification are not intended to be limiting and merely set forth some of the many possible examples for the appended claims. Referring to the drawings wherein like reference numbers correspond to like or similar components throughout the several figures.

On every gas appliance it is generally understood that it is critical to have a precise orifice to control gas flow at different gas pressures for optimal combustion. Such orifices are typically drilled to control valves or gas discharge fittings. The size of an orifice determines the amount gas flow prior to combustion and can vary depending on the type of gas (e.g. natural gas, propane, butane, etc.), the amount of pressure, the application and more. Orifice sizing charts are available from various manufacturers and academic organizations such as ANSI. Manufacturers uses the orifice size charts or customize their orifice size per their application. Once the orifice size is determined, holes are drilled on metal fittings. Metal fittings of this type are usually made from brass in some cases it may be made from stainless steel or other materials.

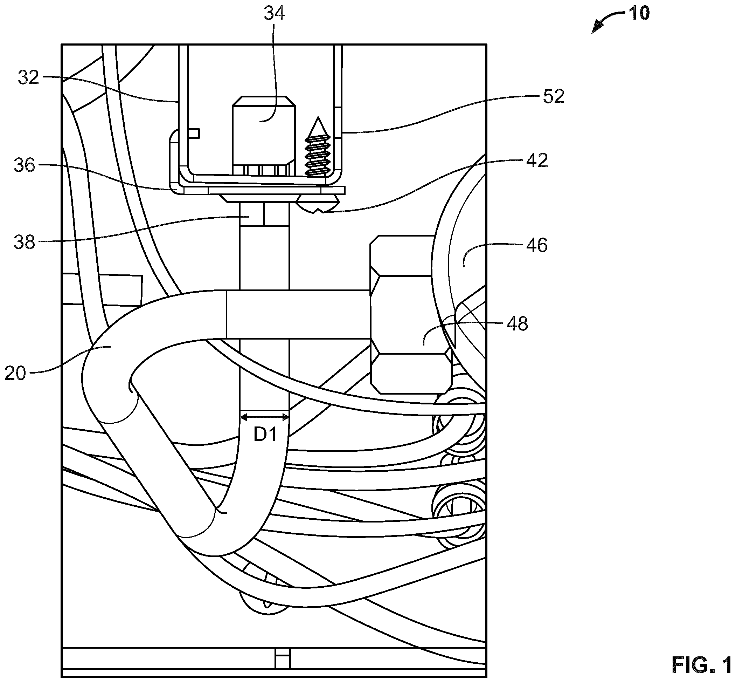

Referring to Figure 1, a gas appliance 10 is presented utilizing prior art orifice fittings 38 of the type described above. As shown, each fitting 38 is attached to gas supply tubing 20. The orifice fittings 38 can be machined and can also be threaded, soldered, flare fitted or affixed via other means to gas line 20.

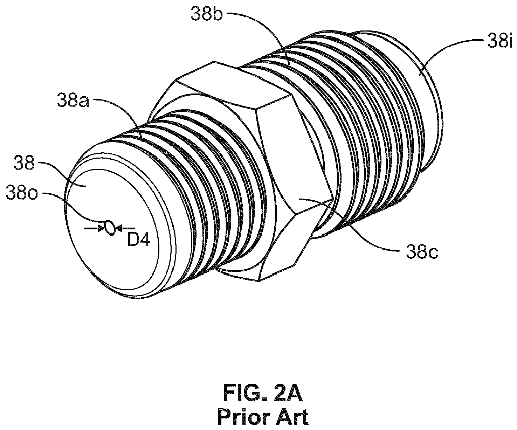

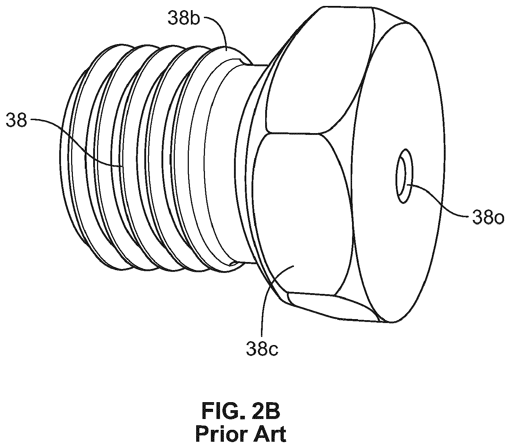

An example prior art orifice fitting 38 having threads 38a is shown in Figure 2A. A typical fitting manufactured this way will have threads 38a, 38b, a dividing piece 38c for welding to a bracket, an inlet for gas 38i and an outlet 38o having a diameter D4. The outlet 38o size D4 is determined by the orifice size of the size charts from either manufacturers or academic organization. Figure 2B presents another prior art example of an orifice fitting 38 that does not include threads 38b. A disadvantage of this type of system is that affixing a separate fitting 38 to the end of a gas line 20 can create unnecessary leaks and incurs a separate product cost.

Referring back to Figure 1, the gas line 20 of the gas appliance 10 is connected at one end to a gas source 46 with a fitting 48. At the other end the gas line 20 is attached to a mixing chamber or tube 32 which is where combustion will take place. In one aspect, the gas line 20 has an outer diameter D1 and an inner diameter D2. In order to connect to the gas line 20 to the mixing chamber or tube 32, the fitting 38 is required as well as a separate bracket 36, a screw 42 or other means to hold the bracket 36 on to the mixing chamber or tube 32. The mixing chamber additionally has an opening 52, schematically shown at Figure 1, for air to enter and mix with the gas to combust. These assemblies can be found in many different applications, for example, from relatively small portable heaters and gas fire places to very large boiler systems. As can be appreciated, a significant number of separate parts required in order for gas to be delivered through the orifice of the fittings 38 and into the combustion chamber 32.

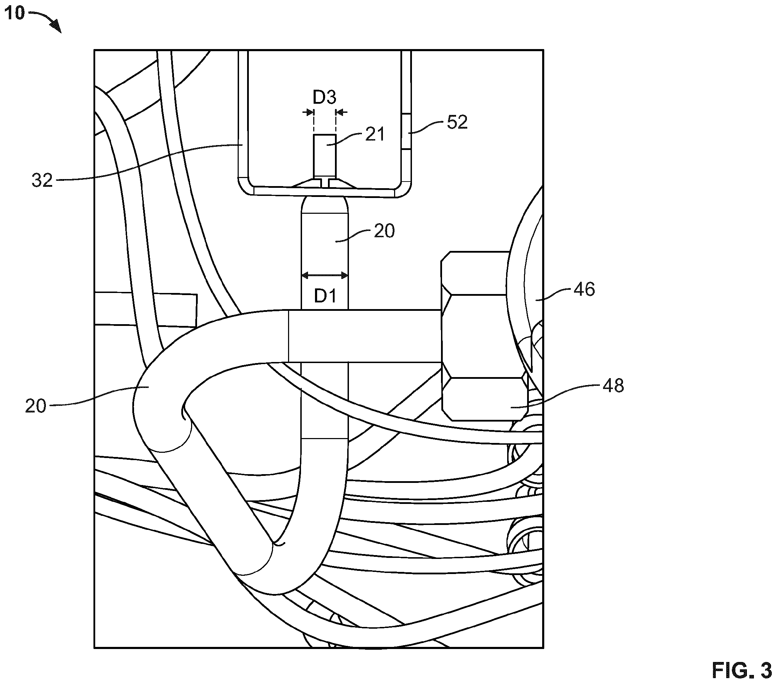

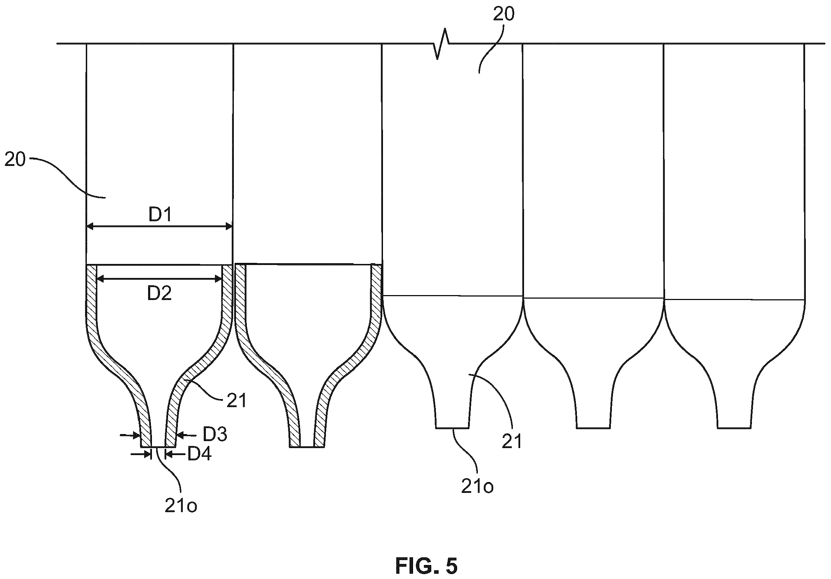

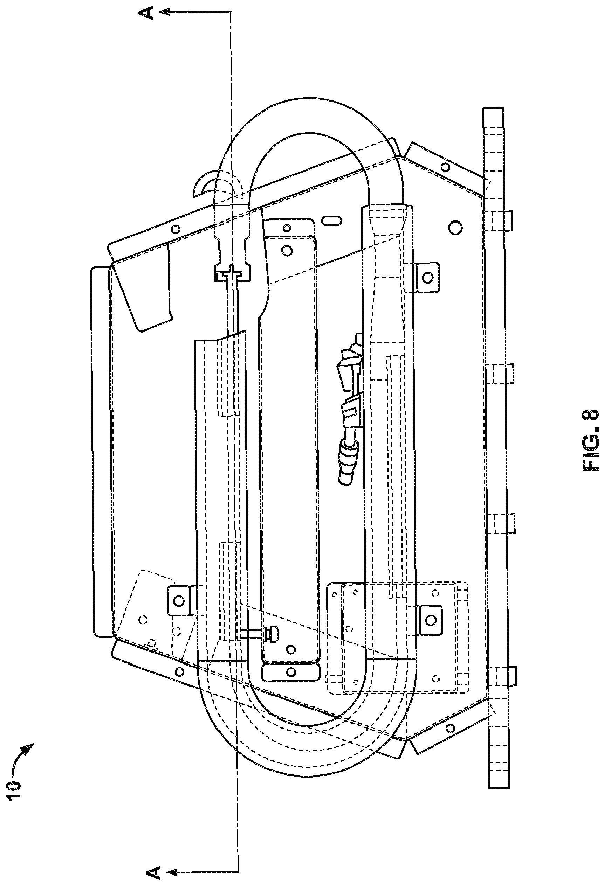

With reference to Figures 3 to 9, an improved gas appliance 10 is presented in which an orifice is formed as a portion of the gas line 20. In one approach, the orifice portion 21 of the gas line 20 can be formed by a metal spinning process such that a narrowed outlet 21o of the desired internal diameter D4 is formed. Spinning the line 20 for manufacturing be made from one single line 20 without the need for any additional adaptors, fittings or components, thus saving assembly time and cost. The shape of the spun line 20 is also more aerodynamic allowing air over the tube to flow and mix with the gas for better combustion. Additionally, as the orifice portion 21 is shown as being the same material as the line 20 itself, which in this case is copper, the orifice portion 21 is formed from a relatively more economical material in comparison to prior art approaches. Figure 5 shows an example of a plurality of tubes 20 which have been spun to form the orifice portion 21, wherein the line 20 has a main internal diameter D2 that is narrowed to a smaller internal diameter D4 at outlet 21o and has a main outer diameter D1 that is likewise narrowed to a smaller outer diameter D3 at outlet 21o. With such an example, the orifice portion 21 can be characterized as being integrally formed with the line 20.

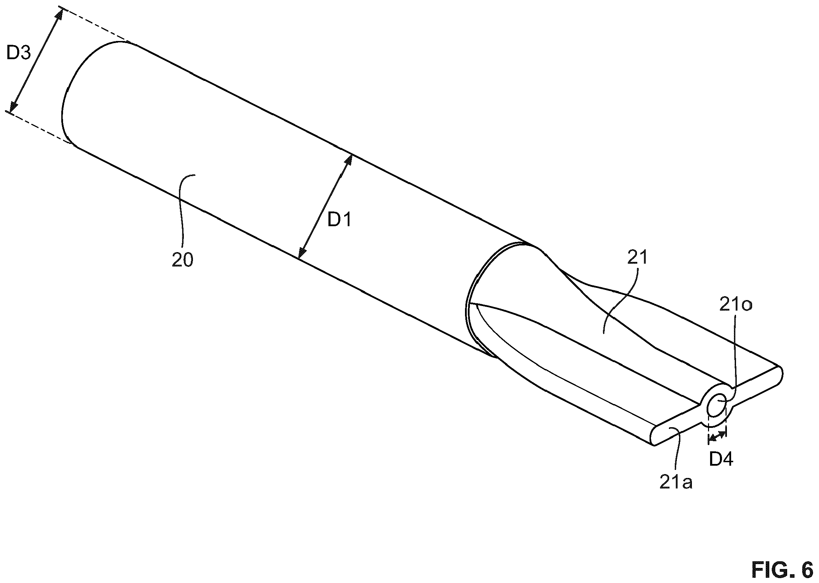

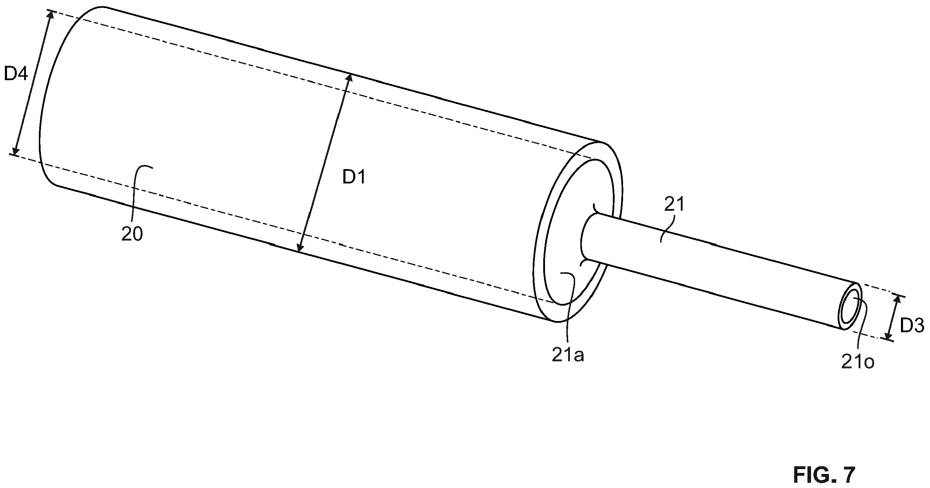

Other approaches for forming the orifice portion 21 are also possible. For example, as shown at Figure 6, the orifice portion 21 is formed by crimping the line 20 down to a required size such that the outer diameter D3 at the outlet 21o is achieved. With such an approach, the edges 21a can be fused, such as by ultrasonic welding or brazing. In some examples, the crimped tubes 20 can be provided with extensions or other connection points can be used to facilitate connecting the tube to the gas appliance 10. Another example is shown at Figure 7, wherein an orifice portion 21 is formed as a separate smaller capillary tube that is attached to the main line 20. Attachment can be facilitated with brazing, soldering, epoxy or with a different way, wherein the attachment material fills the resulting gap 21a between the orifice portion 21 and the line 20. A shaped fitting or crimping could also be used for this purpose. Manufacturing of the orifice portion 21 is not exclusively limited to these above-described techniques.

As indicated previously, the gas line has a first outer diameter D1 which is the diameter of the body of the line 20, and a first inner diameter D2 which is the main area through which the gas travels. Where the main gas line 20 portion ends, with either a spun tube, crimped tube or otherwise manufactured orifice tube 21, there is a second outer diameter D3 where the gas exits. A second inner diameter D4 is also the outlet 21o of the gas line 20 and is the size of the orifice required for various applications based on different manufacturing requirements from the charts of manufacturers or academic organizations.

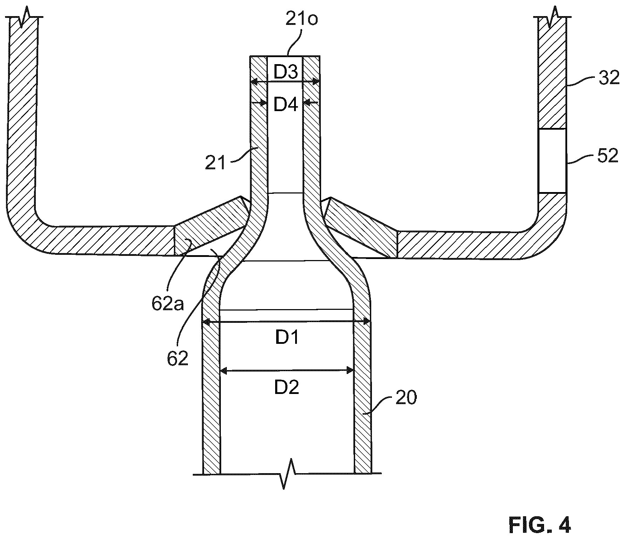

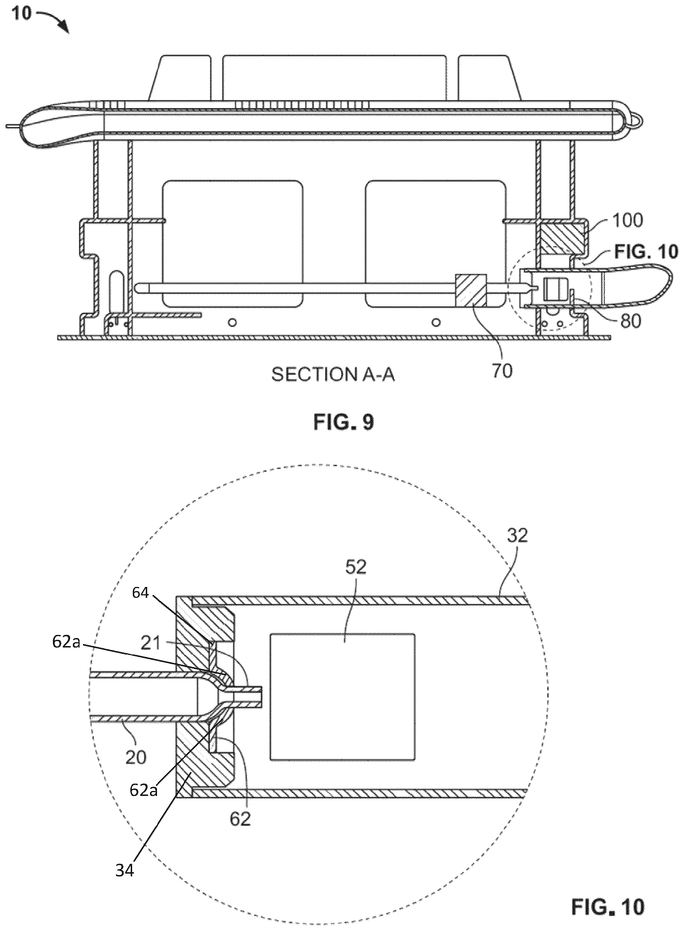

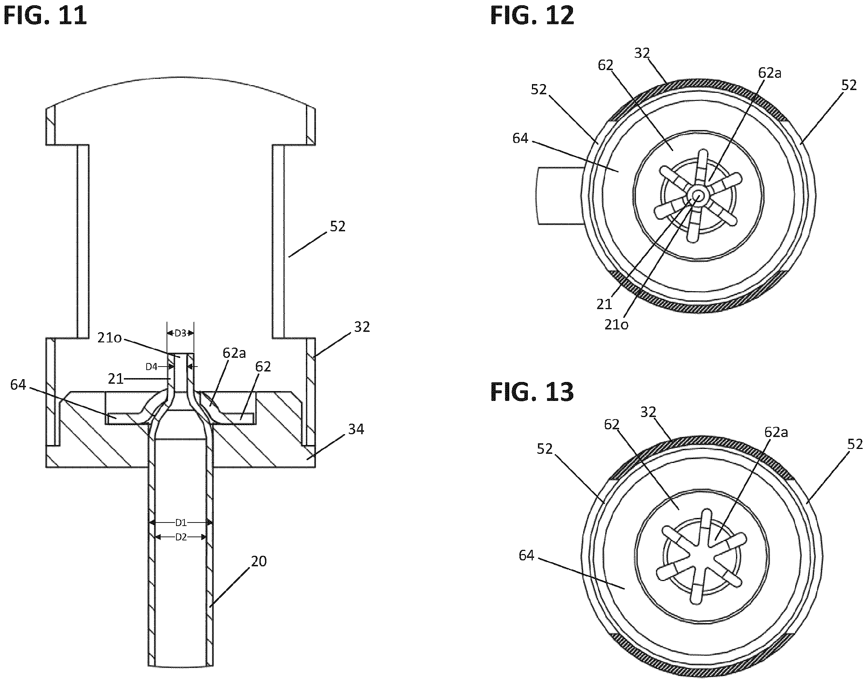

In one aspect, the gas line 20 can be attached to a custom bracket or directly to the mixing chamber since the orifice portion 21 is either integrally formed with the gas line 20 or is a functional extension of the gas line 20. Either approach advantageously reduces the need for a separate fitting and bracket of the typical gas appliance. With reference to the example shown at Figures 3 to 5, the gas appliance 10 is shown as having a gas line 20 connected at one end to a fitting 48 which is in turn connected to a gas source 46. At the opposite end, the gas line 20 is formed to integrally include the orifice portion 21 such that the end has the desired internal diameter D4. As shown, the orifice portion 21 extends into the mixing chamber or tube 32 through an opening 62. As shown, a plurality of deflectable flanges or tines 62a extend radially inward into the opening 62. The flanges or tines 62a deflect upwardly upon insertion of the orifice portion 21 and therefore resist removal of the orifice portion 21 after insertion into the opening 62. Any number of desired flanges or tines 62a can be provided, for example, three, four, five, six, or more tines or flanges 62a. Referring to Figures 12 and 13, an example is shown in which five tines 62a are provided. Also, the tines or flanges 62a can be integrally formed with the mixing chamber or tube 32, as is shown at Figures 3 and 4 or can be formed as a separate component, as is shown at Figures 10-13. In some examples, the orifice portion 21 or another portion of the line 20 can be welded to the flanges or tines 62a or to another portion of the mixing chamber or tube 32. As should be appreciated, the disclosed construction advantageously results in the line 20 and orifice portion 21 to be directly connected to the mixing chamber or tube 32 without the use of separate fittings or fasteners, thereby increasing costs and reliability of the system. In some examples, a spring loaded tube holder may be utilized so that a range of orifice tube options can be accommodated.

Referring to Figures 9 to 13, a fireplace application of the device 10 is shown utilizing the construction shown at Figures 3 to 5. In this example, the fire place 10 the mixing chamber or tube 32 is formed as a mixing chamber or tube 32 with an attached base member 34 into which the line 20 and the orifice portion 21 extend. In the example illustrated, the base member 34, formed as a separate component, is attached to the mixing chamber or tube 32 and supports an annular component 64 forming the tines 62a. The annular component 64 can be formed, for example, by stamping and secured to the base member 34. Alternatively, the annular component can be secured directly to the mixing chamber or tube 32. The mixing chamber or tube 32 is also shown as including a pair of primary air openings 52 in the sidewall of mixing chamber or tube 32 downstream of the orifice portion 21. The device 10 can also be provided with a controller 100, as shown at Figure 9, wired to a gas supply valve 70 and an ignitor 70 extending into the interior volume of the mixing chamber or tube 32 such that the flow of gas through the line 20 can be controlled by the valve 70 and ultimately ignited by the ignitor 70 in the mixing tube.

From the forgoing detailed description, it will be evident that modifications and variations can be made in the aspects of the disclosure without departing from the spirit or scope of the aspects. While the best modes for carrying out the many aspects of the present teachings have been described in detail, those familiar with the art to which these teachings relate will recognize various alternative aspects for practicing the present teachings that are within the scope of the appended claims.

## Claims

1. A gas line for a gas appliance, the gas line comprising;
a) a main portion defined as a portion of a tube and having a first nominal inside diameter; and
b) an orifice portion defined as a portion of a tube and being adjacent the main portion, the orifice portion having a second nominal inside diameter less than the first nominal inside diameter.

2. The gas line of claim 1, wherein the orifice portion and the main portion are integrally formed from a common tube section.

3. The gas line of claim 1 or 2, wherein the orifice portion is a spun metal component.

4. The gas line of any one of the preceding claims, wherein the orifice portion is a crimped metal component.

5. The gas line of any one of the preceding claims, wherein the second nominal inside diameter is less than half of the first nominal inside diameter.

6. The gas line of any one of the preceding claims, wherein the main portion and orifice portion are formed from a copper material.

7. A gas powered appliance comprising;
a) a gas line comprising;
i. a main portion defined as a portion of a tube and having a first nominal inside diameter; and
ii. an orifice portion defined as a portion of a tube and being adjacent the main portion, the orifice portion having a second nominal inside diameter less than the first nominal inside diameter;
b) a mixing chamber defining an opening, wherein the gas line orifice portion extends through the opening into the internal volume of the mixing chamber.

8. The gas powered appliance of claim 7, wherein the orifice portion and the main portion are integrally formed from a common tube section.

9. The gas powered appliance of claim 7 or 8, wherein the mixing chamber includes a plurality of flanges extending radially inward into the opening, the plurality of flanges engaging with the gas line to retain the gas line to the mixing chamber.

10. The gas powered appliance of any one of claims 7-9, wherein the mixing chamber includes a second opening for receiving combustion air.

11. The gas powered appliance of any one of claims 7-10, wherein the orifice portion is a spun metal component.

12. The gas powered appliance of any one of claims 7-11, wherein the orifice portion is a crimped metal component.

13. The gas powered appliance of any one of claims 7-12, wherein the second nominal inside diameter is less than half of the first nominal inside diameter.

14. The gas powered appliance of any one of claims 7-13, wherein the main portion and orifice portion are formed from a copper material.
